# EUROPEAN PATENT SPECIFICATION

(11) **EP 0 872 937 B1**
(45) Date of publication and mention of the grant of the patent: **08.10.2003**
(21) Application number: 98500092.6
(22) Date of filing: 17.04.1998
(51) Int. Cl.: H02G 7/20, G02B 6/48, G02B 6/44, H02G 1/04

(54) **Metal armoured cable system for channelizing application means such as signal transmissions, energy and fluid conductions and other purposes**
Kabelsystem mit Metall-Armierung für die Verlegung von Leitungen zur Kanalisierung von Daten, Strom, Flüssigkeit und Ähnlichem
Système de cable avec armement en métal apporté aux lignes de canalisation d'applications telles que la transmission de signaux, d'énergie, de fluides et similaires

(30) Priority: 18.04.1997 AR 10156097
(43) Date of publication of application: 21.10.1998
(73) Proprietor: Professional Communications S.A., Buenos Aires 1002 (AR)
(72) Inventor: Castano, Ruben Carlos, (1875) Wilde, Pcia. de Buenos Aires (AR)
(74) Representative: Elzaburu Marquez, Alberto

(56) References cited:
- EP-A- 0 092 980
- FR-A- 2 591 792
- GB-A- 2 289 804

## Description

### I. Field of the Invention

The present invention is related to a new cable concept for the laying of transmission, conduction and communication lines, and more particularly, it refers to a metal-armoured cable system for channelizing application means such as communication, signal transmission, energy and fluid conduction and other purposes, as per the preamble of claim 1.

Though in principle, the invention has been particularly developed for its application in the laying of optical fibers, in practice the new channeling unit is applicable to other transmission, conduction and communication means which are compatible with the longitudinal holding cavity of a specially designed tubular structure. And though in order to simplify, from now on, we will talk about the laying of optical fibers, it is understood that the same concepts or similar concepts are applicable to other types of lines and fluids, in general.

### State of the art

The transmission to large distances of communication signals, electrical conduction and related applications may be carried out by the laying of cables. The laying is made using any of the three conventional procedures.
a) Underground: it consists in burying the cables lodged into pipes and in hermetic sheaths. This method has several inconveniences, such as the high installation and operating costs, particularly when it is necessary to make repairs or modifications in the network, forcing to a continous alternating excavation and covering of ditches, which at the same time become a dangerousness factor (because generally they are not visible).
b) Underwater, through the laying of submarine cables or of cables which lie in the bed of rivers and lakes. It is yet a more expensive technology than the one we have seen at a); it requires the laying at very deep distances in order to avoid accidents caused by ships of bigger drafts o by other aquatic means of transport. Besides, the cables must be provided with hermetic sheaths of great resistance to the hydraulic pressures and to the degradation produced by the liquid environment itself.
c) Aerial, through the use of poles, towers or other supports which hold in place the cables laid through and are arranged at a certain distance from the floor level (safety level). The access to this system is easier and quicker, making possible the repairs and modifications of the network and of its connections in a direct way. The laying of optical fibers on high voltage overhead lines allows to set up a communication network of high quality, using the towers of preexistent electrical networks and the corresponding right-of-way, with a noticeably lower cost than the cost of an underground installation.

In the known filed, the aerial laying is often carried out with the following techniques:

### A) Laying over high voltage conductors

The high voltage lines have in their upper part at least a metallic cable denominated "guard wire".

The aim of this security cable is to protect the high voltage network and its supporting structures from possible atmospheric electric discharges (lightning).

The determination of the characteristics of this cable is governed by two main conditions:
. Structural requirements, taking into account the span lentgh, or the distance between towers, and the action of the wind, ice and snow loads, if any.
. Electric requirements, taking into account the short-circuit current and the maximum current pulse (lightning impact).

For the laying of optical fibers, one of the known resources is to replace the guard wire by a specially designed cable that holds inside such kind of fiber. In this way, this cable performs the function of a guard wire and supports the optical fibers, simultaneously.

At present, with respect to the installation method, there are two options:

### A1) Installation with un-energized lines:

i) When a new un-energized line is installed, the optical cable is incorporated during the procedure of the own high voltage line installation.
ii) When the installation is carried out on a preexistent line, to replace the guard wire by the optical cable, it is necessary to disconnect the electric supply to carry out the installation. This situation involves an economical loss due to non-invoiced energy, fines for the lack of rendering of the electric service and the corresponding payments for such cuts.

### A2) Installation with the lines energized:

In order to avoid inconveniences caused by the interruptions in the service, special installation techniques must be used, which allow the laying of optical cables even with the high voltage lines energized. Obviously, these methods are more expensive and slower, and involve higher risks.

### B) Laying below the high voltage conductors

A cable made up of dielectric materials, which protect and support the optical fibers, is laid below the energized conductors.

This method makes possible an installation with the energized lines at a lower cost, with less interruptions in the service and with a lower load on the towers by the aeolian efect, due to the lower height at which the cable is held.

In order to support the cable, there exist particularly two options:
1) Self-supported dielectric cable: it uses a central core of aramidic fiber ("Kevlar") to support the mechanical stress.
2) Support by means of a messenger dielectric cable: it uses a cable ("messenger cable") of aramidic fiber to support the dielectric cable which contains the optical fibers.

In any of these options, the cable design must take into account the structural requirements, the function of the lenght of the span (or distance among the towers) , and the action of the loads caused by atmospheric factors (wind, ice and snow). Nevertheless, the use of dielectric materials on the sheath of the optical cable makes it necessary to take into account, particularly, the environmental conditions, which originate the following inconveniences:
a) Degradation of the dielectric sheath of the cable by electromagnetic effects (which has forced to use the method only on lines of the voltages equal or lower than 66 KV; or in aerial lines with middle and high tension superior to 50 KV).
b) Degradation of the external sheath due the environmental conditions, the action of the wind, the erosion, the solar radiation, hydrometeors, etc.
c) Degradation of the external sheath due to the effect of the regional fauna (mainly, the birds which sit on or peck such sheath).

On the other hand, the existence of structural limitations due to the cable design, or its use in spans superior to 100 m; not having experience in layings with spans superior to 150 m.

As an example of the prior art, EP-A-0 092 980 can be cited, wherein an overhead conductor is disclosed that incorporates an optical guide and comprises an aluminium central core having an elongate compartment in which an optical fibre is loosely housed, a layer of steel wires surrounding the central core and an outer layer of aluminium surrounding said steel wires. The interstices between the steel wires are at least partially filled with aluminium of the central core and/or of said outer layer.

As a further example of the prior art, FR-A-2 591 792 describes an aerial electric cable and a process for manufacturing same, the cable comprising a core containing optical waveguides, a sheathing of thermoplastic or elastomeric material surrounding the core, and an armature under or over the sheathing, wherein the thermoplastic or elastomeric material, after grafting silan compounds, is crosslinked by the action of humidity and contains additives ensuring the leakage current resistance of said material, such as metal oxides, carbides and others having a similar action either individually or in combination.

### The new inventive concept

The invention referred to in the present document has solved all the problems raised, in a very easy and ingenious way, through the laying of a cable which, with an effectively grounded tubular metallic sheath, and carrying inside the optical fibers, is held to the line structures, in a zone delimited in its lower part by the standardized security limit for each zone and, inside the protected area, by the guard wire.

This technological development, though the simplicity of its features:
⇒ Simplifies noticeably the installation of the optical cable in the energized lines;
⇒ Minimizes the necessity of the programmed cuts;
⇒ Is easily handled;
⇒ Offers an appropiate protection to the optical fibers as to both the electromagnetic and environmental effects and the fauna, extending the useful life of the cable in such a way that it does not degrade;
⇒ Needs a smaller load on the towers -in comparison with a laying on tops of the structure, due to a smaller lever arm;
⇒ Diminishes the electrical requirements on the cable, since it does not act as the guard wire;
=> Allows to the designer a greater freedom for the choice of the mechanical parameters of the cable, reducing noticeably the costs, for example making it possible the use of smaller sections and optimizing the design for the different span lenghts;
⇒ Separating the mechanical requirements from the electrical ones, makes it possible to improve the cable design, reducing noticeably its cost and simplifying the installation.

The main features of the invention are disclosed in the characterizing portion of claim 1, while the dependent claims include further features of the same invention.

### II- Brief Description of the Drawings

For a better clarity and comprehension of the aim of this invention, it is illustrated with different drawings in -which one of its preferred embodiments has been represented, to be understood as an illustrative but not limitative example.
Figure 1 is a view in perspective corresponding to a supporting tower of high voltage lines, over which it may be seen the laying of the new cable, the aim of this invention, which, in order to make easier its location, has been represented with strokes more highlighted than the rest;

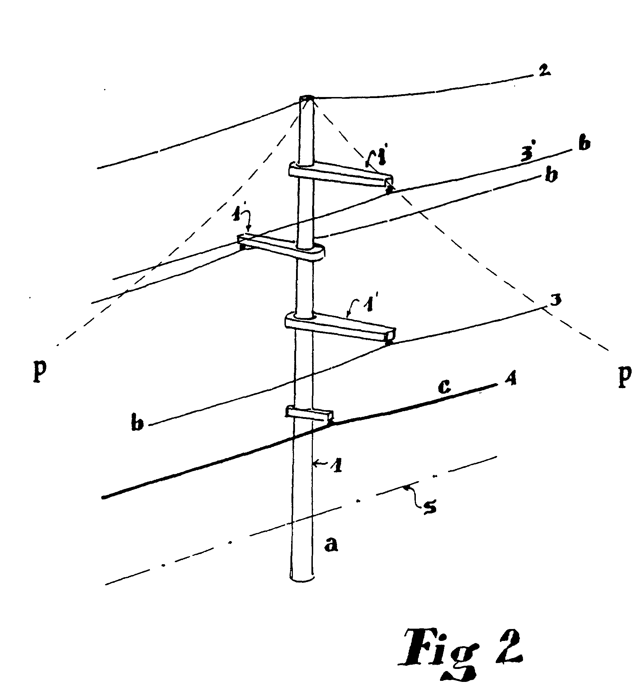

Figure 2 is a schematic detail of the tower, where the zone has been marked inside the limits of which the cable is laid;
Figure 3 is a cross section of the cable, showing the tubular shape of its metal sheathing, the layers that form it and the channelized means, which, in this case, corresponds to any set of cables of optical fiber; and finally
Figure 4 is a scheme of two towers where it is observed the installation of the new optical fiber tubular channeling unit or other applications, with reference to the security level above the floor, and one of the high voltage cables. In this figure it may be observed how it is kept:
   . the minimum distance between such a low voltage cable and the mentioned channeling unit, whatever the sags that one or the other may present in the laying;
   . the minimum distance between the same channeling unit and the safety limit (safety level) that the regional rules or the rules of each country state with respect to the floor, as well as the electrical and mechanical minimum distances to the energized conductors;
   . the location of such channeling unit inside the zone protected by the guard wire.

In the different figures, the same reference numbers indicate the equal or the corresponding parts, and the assemblies of various elements have been marked with letters.

### List of the main references:

(a) Support tower
(b) High voltage cables
(c) Tubular element
(p) Limit of the zone protected by the guard wire
(s) Security level
(1) Columns of tower (a)
(1') Arms of tower (a)
(2) Guard wire
(3) High voltage conductors laid at a lower height
(3') High voltage conductors laid at a higher height
(4) External metal sheathing of (c)
(5) Aluminium pipe
(6) Optical fiber cables
(7) Dielectric core

### III - Main Object

Taking into account the aims defined, the invention provides a metal-armoured cable system for channelizing application means, such as signal transmissions, energy and fluid conduction and other purposes, adapted to be arranged in high voltage aerial line systems, mainly formed by support towers (a) of a set of high voltage conductors (b), which, at the top, include a guard wire (2) laid among such towers; and this set of high voltage conductors (b) laid among the towers (a) to a certain distance from the ground is arranged over the predetermined security level (s) ; and the above cable system comprises a tubular element (c) arranged in a zone delimited at the lower side by such security level (s) and inside the guard wire protection zone (p), along all the distance among the towers, said tubular element, laid among the same towers (a), having a grounded external metal sheathing (4), forming an internal longitudinal cavity, that provides the channeling unit of the mentioned application means (6).

### IV - Detailed Description of the Invention

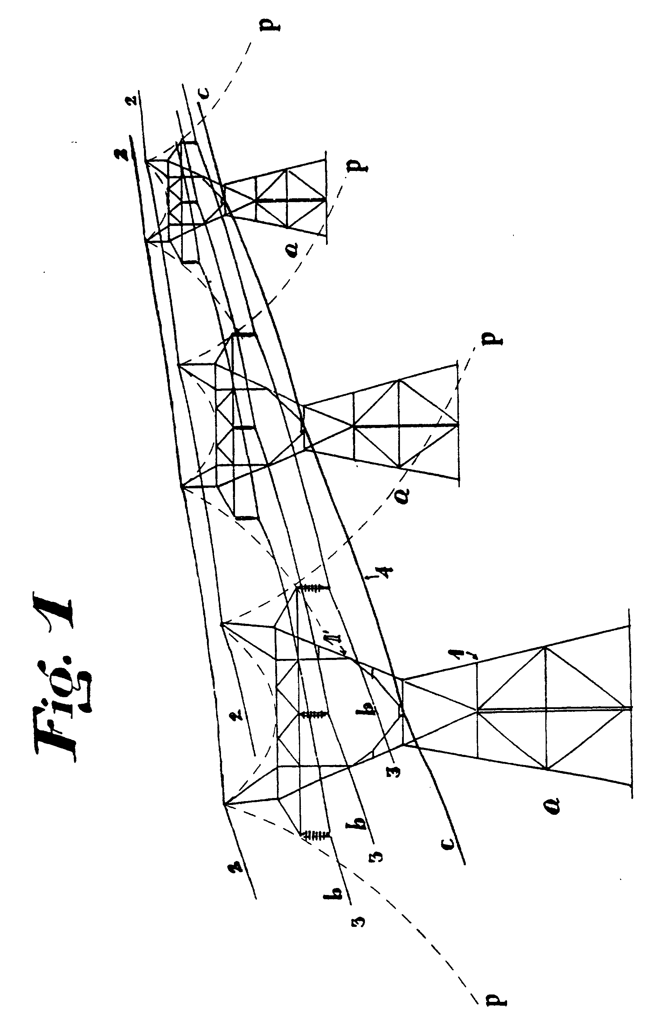

In a general way, the invention consists in a lengthened tubular element (c) which, having special features, is laid on a special zone of the towers (a) that support the high voltage lines (b), without damaging or altering their structures, and without changing its guard wire (2) arranged in the highest zone of such towers (a), [Figure 1].

For new high voltage installations, the laying of the lengthened tubular element (c) makes it possible the arrangement to the towers (a) with the system yet without being energized.

By the contrary, if it is applied to preexistent installations, the laying of the new cable may be carried out with the network energized, without the necessity of making cuts in the line of the installation.

Particularly, such tubular element consists in an external metalic sheathing (4), for example of steel, that sheathes or coats an aluminium pipe (5), with a longitudinal cavity delimited with this pipe, prepared to channelize through it an application means such as communication, signal transmissions, energy conductors, liquids or gaseous fluids or any of the applications mentioned above in the exposition of the Field of the Invention of this document.

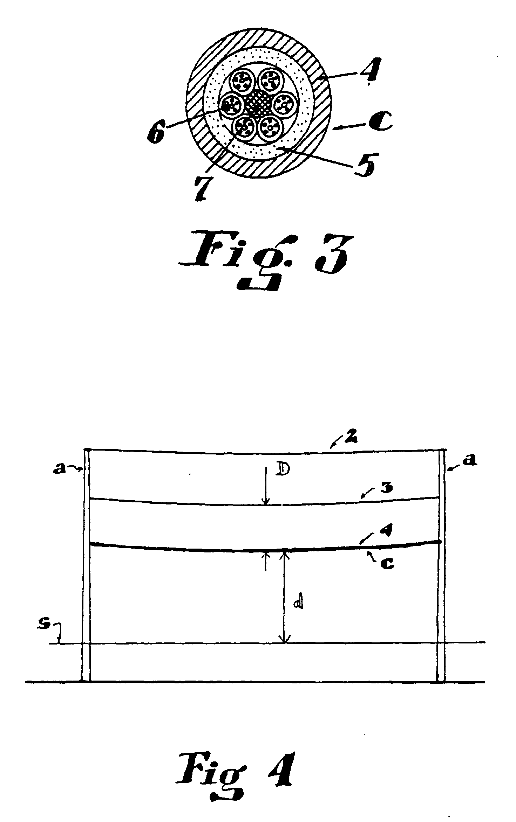

In a favorite but not restrictive way of execution, the longitudinal cavity of the aluminium pipe (5) channelizes optical fiber cables (6) with its correspondent sheaths, arranged around a dielectric core (7) [Figure 3].

By the presence of its external metal sheathing (4), made of steel and combined with the aluminium pipe (5), the new cable becomes so a self-supporting cable, with the characteristic that its external sheath (4) is not degradable by the ionic or the environmental effects, the action of the wind, the erosion, the ultraviolet radiation, hydrometeors, birds, rodents, insects, etc.

The mentioned cable (c) formed in this way is held through installation accesories which will have to secure an appropiate grounding, and it is laid among the same towers (a) [(probably in their columns (1)] in a zone delimited at the lower side by the security level (s) stated by the current general or zonal law, inside the zone (p) protected by the guard wire, and respecting the minimum electric and mechanical distances along all the extension of the span (Figure 4).

It has been provided:
- that the external metalic sheath be formed by a metalic tube, a tubular metalic mesh, a hollow metalic helicoidal cable, or something similar appropiated;
- that the tubular element of metalic sheath:
   . have an external carrier (for example, through the supply of an occluded cable along a longitudinal protrusion like an "8" of the own metalic sheath);
   . have an internal carrier (such as the supply of an extended steel cable along the cavity as a core);
   . be self-supporting, in virtue of the own structure of its metalic sheathing.
- that the tubular metalic sheathing be of steel, copper or any other appropiated metal.

For each line in particular, this new procedure requires to take into account or to consider the following concepts:
a) It must be analyzed the minimum separation of the tubular element (c) with respect to the nearest energized conductors (3), along all the span among towers (a); and this, taking into account the security regulations, the losses due to parasitic current, the unexpected line impedance modifications, as well as the effects of the ice and snow gathering, and the birds on the lines.
b) From the structural and electric point of view, it will have to be very carefully selected the type of intallation accesory to be used, as well as the best fastening point at the tower structure (a).
c) When it is applied to preexistent towers (a), it will have to be considered the structure design and their foundations with respect to the additional load due to the optical cable and to its metalic sheathing (4).
d) It will have to be analyzed the minimum height of the optical cable with respect to the ground, in order to accomplish the regulating requirements, in particular with respect to the cross of lines with roads and other electric lines.
e) It will also have to take into account the requirements of grounding for the different types of structures used.
f) It will have to verify that the tubular element (c) be inside the protection zone (p) of the guard wire.

Certainly, when this invention begins to be used, it will be able to be modified with respect to certain construction and shape details. But this will not mean to leave the fundamentals ideas which are clearly exposed in the following claims.

## Claims

1. Metal-armoured cable system for channelizing application means such as signal transmissions, energy and fluid conduction and other purposes, adapted to be arranged in high voltage aerial line systems, essentially formed by support towers (a) of a set of high voltage conductors (b), which, by the upper side, include a guard wire (2) laid among the same towers; and this set of high voltage conductors, laid among the towers at a certain height from the ground, is arranged over the predetermined safety level ( s ) ; **characterized by** comprising a tubular element (c) arranged in a zone delimited at the lower side by such safety level (s) and inside the zone (p) protected by the guard wire (2), along all the distance among the towers (a), said tubular element, laid among the same towers, having an external metalic sheathing (4) grounded and forming an internal longitudinal cavity that provides the channeling unit of said application means.

2. System according to claim 1, **characterized in that** the external metalic sheathing (4) is a metalic tubular wall that sheaths at least one pipe (5) that forms the channelizing cavity of the application means.

3. System according to claim 1, **characterized in that** the external metalic sheathing (4) is a steel tubular wall that sheaths at least one aluminium pipe (5) that forms the channelizing cavity of the application means.

4. System according to claim 1, **characterized in that** the external metalic sheathing (4) is a metalic tubular mesh that sheaths at least one pipe (5) that forms the channelizing cavity of the application means.

5. System according to claim 1, **characterized in that** the external metalic sheathing (4) is a hollow helicoidal cable that sheaths at least one aluminium pipe (5) that forms the channelizing cavity of the application means.

6. System according to claim 1, **characterized in that** such tubular element (c) holds a carrier element for same.

7. System according to claim 6, **characterized in that** the carrier element is external.

8. System according to claim 7, **characterized in that** the carrier element is a cable located along a longitudinal protrusion of the metalic sheathing (4) itself.

9. System according to claim 6, **characterized in that** the carrier element is internal.

10. System according to claim 8, **characterized in that** the carrier element is a steel cable which forms the core around of which the optical fiber cables (6) are arranged.

11. System according to claim 6, **characterized in that** such tubular element (c) is self-supporting through its own external metalic sheathing (4).

12. System according to claim 1, **characterized in that** the application means channelized through the tubular element (c) are optical signal transmission lines.

13. System according to claim 1, **characterized in that** the application means channelized through the tubular element (c) are electromagnetic signal transmission lines.

14. System according to claim 1, **characterized in that** the application means channelized through the tubular element (c) are optical fiber cables.

15. System according to claim 1, **characterized in that** the application means channelized through the tubular element (c) are electric cables.

16. System according to claim 1, **characterized in that** the application means channelized through the tubular element (c) are telephone cables.

17. System according to claim 1, **characterized in that** the application means channelized through the tubular element (c) are coaxial cables.

18. System according to claim 1, **characterized in that** the application means channelized through the tubular element (c) are multipair cables for the transmission of communication system signals.

19. System according to claim 1, **characterized in that** the application means channelized through the tubular element (c) are fluids.

20. System according to claim 1, **characterized in that** the application means channelized through the tubular element (c) are a combination of fluids.

21. System according to claim 1, **characterized in that** the application means channelized through the tubular element (c) are formed by a gas.

22. System according to claim 1, **characterized in that** the application means channelized through the tubular element (c) are a combination of gases.

23. System according to claim 1, **characterized in that** the application means channelized through the tubular element (c) are formed by a liquid.

24. System according to claim 1, **characterized in that** the application means channelized through the tubular element (c) are formed by a combination of liquids.

25. System according to claim 1, **characterized in that** the application means channelized through the tubular element (c) are formed by fluids forming a combination of gaseous and liquid phases.

## Patentansprüche

1. Abgeschirmtes Kabelsystem zum kanalisieren von Einspeisungsmedien, wie beispielsweise die Signalübermittlung, die Fluid- und Energieführung und andere Zwecke, angepasst um sie auf oberirdischen Hochspannungsleitungssystemen zu errichten, im wesentlichen für Stützmasten (a) gestaltet mit einem Satz von Hochspannungsleitungen (b), welcher auf der Oberseite eine Schutzleitung (2), angeordnet zwischen denselben Masten, enthält; und dieser Satz von Hochspannungsleitungen angeordnet zwischen den Masten, auf einer bestimmten Höhe vom Boden, über dem vorbestimmten Sicherheitsniveau (s) errichtet ist; **gekennzeichnet dadurch dass** es ein röhrenförmiges Element (c) errichtet in einer abgegrenzten Zone, im Unterteil durch jenes Sicherheitsniveau (s) und innerhalb der Zone (p) durch die Schutzleitung (2) geschützt, enthält, entlang der gesamten Distanz zwischen den Masten (a), hat besagtes röhrenförmiges Element, gelegen zwischen denselben Masten, eine geerdete, äußerlich metallische Hülle (4) und die einen inneren länglichen Hohlraum bildet, der die Kanalisationseinheit des besagten Einspeisungsmediums schafft.

2. System nach dem Patentanspruch 1, **gekennzeichnet dadurch dass** die äußerlich metallische Hülle (4) eine röhrenförmige metallische Wand ist, die mindestens eine Röhre (5) ummantelt, die den kanalisierenden Hohlraum der Einspeisungsmedien bildet.

3. System nach dem Patentanspruch 1, **gekennzeichnet dadurch dass** die äußerlich metallische Hülle (4) eine röhrenförmige Wand aus Stahl ist, die mindestens eine Aluminiumröhre (5) ummantelt, die den kanalisierenden Hohlraum der Einspeisungsmedien bildet.

4. System nach dem Patentanspruch 1, **gekennzeichnet dadurch dass** die äußerlich metallische Hülle (4) ein röhrenförmiges Drahtgewebe ist, das mindestens eine Röhre (5) ummantelt, die den kanalisierenden Hohlraum der Einspeisungsmedien bildet.

5. System nach dem Patentanspruch 1, **gekennzeichnet dadurch dass** die äußerlich metallische Hülle (4) ein schraubenförmiges Hohlkabel ist, das mindestens eine Aluminiumröhre (5) ummantelt, die den kanalisierenden Hohlraum der Einspeisungsmedien bildet.

6. System nach dem Patentanspruch 1, **gekennzeichnet dadurch dass** solches röhrenförmige Element (c) ein selbsttragendes Element enthält.

7. System nach dem Patentanspruch 6, **gekennzeichnet dadurch dass**, das Trägerelement außen ist.

8. System nach dem Patentanspruch 7, **gekennzeichnet dadurch dass**, das Trägerelement ein Kabel, angebracht entlang eines Längswulstes, derselben metallischen Hülle (4) ist.

9. System nach dem Patentanspruch 6, **gekennzeichnet dadurch** das, das Trägerelement innen ist.

10. System nach dem Patentanspruch 8, **gekennzeichnet dadurch dass**, das Trägerelement ein Stahlkabel ist, welches den Kern bildet, um welchen ringsherum die Glasfaserkabel (6) angeordnet sind.

11. System nach dem Patentanspruch 6, **gekennzeichnet dadurch dass** solches röhrenförmige Element (c) dank seiner eigenen äußerlich metallischen Hülle (4) eigenstabil ist.

12. System nach dem Patentanspruch 1, **gekennzeichnet dadurch dass** die Einspeisungsmedien, kanalisiert durch das röhrenförmige Element (c), Übertragungsleitungen von optischen Signalen sind.

13. System nach dem Patentanspruch 1, **gekennzeichnet dadurch dass** die Einspeisungsmedien, kanalisiert durch das röhrenförmige Element (c), Übertragungsleitungen von elektromagnetischen Signalen sind.

14. System nach dem Patentanspruch 1, **gekennzeichnet dadurch dass** die Einspeisungsmedien, kanalisiert durch das röhrenförmige Element (c), Glasfaserkabel sind.

15. System nach dem Patentanspruch 1, **gekennzeichnet dadurch dass** die Einspeisungsmedien, kanalisiert durch das röhrenförmige Element (c), elektrische Kabel sind.

16. System nach dem Patentanspruch 1, **gekennzeichnet dadurch dass** die Einspeisungsmedien, kanalisiert durch das röhrenförmige Element (c), Telefonkabel sind.

17. System nach dem Patentanspruch 1, **gekennzeichnet dadurch dass** die Einspeisungsmedien, kanalisiert durch das röhrenförmige Element (c), koaxiale Kabel sind.

18. System nach dem Patentanspruch 1, **gekennzeichnet dadurch dass** die Einspeisungsmedien, kanalisiert durch das röhrenförmige Element (c), vielpaarige Kabel für die Signalübertragung von Kommunikationssystemen sind.

19. System nach dem Patentanspruch 1, **gekennzeichnet dadurch dass** die Einspeisungsmedien, kanalisiert durch das röhrenförmige Element (c), Fluide sind.

20. System nach dem Patentanspruch 1, **gekennzeichnet dadurch dass** die Einspeisungsmedien, kanalisiert durch das röhrenförmige Element (c), eine Kombination von Fluiden sind.

21. System nach dem Patentanspruch 1, **gekennzeichnet dadurch dass** die Einspeisungsmedien, kanalisiert durch das röhrenförmige Element (c), aus einem Gas gebildet sind.

22. System nach dem Patentanspruch 1, **gekennzeichnet dadurch dass** die Einspeisungsmedien, kanalisiert durch das röhrenförmige Element (c), eine Kombination von Gasen sind.

23. System nach dem Patentanspruch 1, **gekennzeichnet dadurch dass** die Einspeisungsmedien, kanalisiert durch das röhrenförmige Element (c), aus einer Flüssigkeit gebildet sind.

24. System nach dem Patentanspruch 1, **gekennzeichnet dadurch dass** die Einspeisungsmedien, kanalisiert durch das röhrenförmige Element (c), eine Kombination von Flüssigkeiten sind.

25. System nach dem Patentanspruch 1, **gekennzeichnet dadurch dass** die Einspeisungsmedien, kanalisiert durch das röhrenförmige Element (c), durch Fluide gebildet sind, die aus einer Kombination von gasförmigen und flüssigen Phasen bestehen.

## Revendications

1. Système de câble blindé pour canaliser des moyens d'application, tels que la transmission de signaux, la conduite de fluides et d'énergie, et d'autres buts, adapté pour être disposé dans des systèmes de lignes élevées de haute tension, formés essentiellement de tours (a) de support d'un ensemble de conducteurs (b) de haute tension, lequel, du côté supérieur, comporte un conducteur (2) de protection disposé entre les mêmes tours; et cet ensemble de conducteurs de haute tension, disposés entre les tours à une hauteur déterminée du sol, est disposé au niveau (s) prédéterminé de sécurité; **caractérisé en ce qu'**il comprend un élément (c) tubulaire disposé dans une zone délimitée par la partie inférieure par ledit niveau (s) de sécurité et dans la zone (p) protégée par le conducteur (2) de protection, tout le long de la distance entre les tours (a), ledit élément tubulaire ayant, posé entre les mêmes tours, une gaine (4) métallique externe mise à terre et formant une cavité interne longitudinale qui fournit l'unité de canalisation dudit moyen d'application.

2. Système selon la revendication 1, **caractérisé en ce que** la gaine (4) métallique externe est une paroi tubulaire métallique qui revêt au moins une tubulure (5) qui forme la cavité de canalisation des moyens d'application.

3. Système selon la revendication 1, **caractérisé en ce que** la gaine (4) métallique externe est une paroi tubulaire en acier qui revêt au moins une tubulure (5) en aluminium qui forme la cavité de canalisation des moyens d'application

4. Système selon la revendication 1, **caractérisé en ce que** la gaine (4) métallique externe est une maille tubulaire métallique qui revêt au moins une tubulure (5) qui forme la cavité de canalisation des moyens d'application.

5. Système selon la revendication 1, **caractérisé en ce que** la gaine (4) métallique externe est un câble hélicoïdal creux qui revêt au moins une tubulure (5) en aluminium qui forme la cavité de canalisation des moyens d'application.

6. Système selon la revendication 1, **caractérisé en ce que** ledit élément (c) tubulaire loge un élément porteur pour cela.

7. Système selon la revendication 6, **caractérisé en ce que** l'élément porteur est externe.

8. Système selon la revendication 7, **caractérisé en ce que** l'élément porteur est un câble situé le long d'une protubérance longitudinale de la même gaine (4) métallique.

9. Système selon la revendication 6, **caractérisé en ce que** l'élément porteur est interne.

10. Système selon la revendication 8, **caractérisé en ce que** l'élément porteur est un câble en acier qui forme le noyau autour duquel sont disposés les câbles (6) de fibre optique.

11. Système selon la revendication 6, **caractérisé en ce que** ledit élément (c) tubulaire est auto-stable grâce à sa propre gaine (4) métallique externe.

12. Système selon la revendication 1, **caractérisé en ce que** les moyens d'application canalisés à travers l'élément (c) tubulaire sont des lignes de transmission de signaux optiques.

13. Système selon la revendication 1, **caractérisé en ce que** les moyens d'application canalisés à travers l'élément (c) tubulaire sont des lignes de transmission de signaux électromagnétiques.

14. Système selon la revendication 1, **caractérisé en ce que** les moyens d'application canalisés à travers l'élément (c) tubulaire sont des câbles de fibre optique.

15. Système selon la revendication 1, **caractérisé en ce que** les moyens d'application canalisés à travers l'élément (c) tubulaire sont des câbles électriques.

16. Système selon la revendication 1, **caractérisé en ce que** les moyens d'application canalisés à travers l'élément (c) tubulaire sont des câbles téléphoniques.

17. Système selon la revendication 1, **caractérisé en ce que** les moyens d'application canalisés à travers l'élément (c) tubulaire sont des câbles coaxiaux.

18. Système selon la revendication 1, **caractérisé en ce que** les moyens d'application canalisés à travers l'élément (c) tubulaire sont des câbles multipaires pour la communication de signaux de systèmes de communications.

19. Système selon la revendication 1, **caractérisé en ce que** les moyens d'application canalisés à travers l'élément (c) tubulaire sont des fluides.

20. Système selon la revendication 1, **caractérisé en ce que** les moyens d'application canalisés à travers l'élément (c) tubulaire sont une combinaison de fluides.

21. Système selon la revendication 1, **caractérisé en ce que** les moyens d'application canalisés à travers l'élément (c) tubulaire sont formés par un gaz.

22. Système selon la revendication 1, **caractérisé en ce que** les moyens d'application canalisés à travers l'élément (c) tubulaire sont une combinaison de gaz.

23. Système selon la revendication 1, **caractérisé en ce que** les moyens d'application canalisés à travers l'élément (c) tubulaire sont formés par un liquide.

24. Système selon la revendication 1, **caractérisé en ce que** les moyens d'application canalisés à travers l'élément (c) tubulaire sont une combinaison de liquides.

25. Système selon la revendication 1, **caractérisé en ce que** les moyens d'application canalisés à travers l'élément (c) tubulaire sont formés par des fluides qui forment une combinaison de phases gazeuse et liquide.
